# EUROPEAN PATENT APPLICATION

(11) **EP 2 929 778 A1**
(43) Date of publication of application: **14.10.2015**
(21) Application number: 14425040.4
(22) Date of filing: 07.04.2014
(51) Int. Cl.: A01G 9/02

(54) **An assemblable green wall**

(71) Applicant: Total Packaging Srl, 25128 Brescia (BS) (IT)
(72) Inventor: Griziotti, Alessandra, I-48022 Lugo, Ravenna (IT); Baudino, Marco, I-24047 Treviglio, Bergamo (IT)
(74) Representative: Corradini, Cesare

(57) **Abstract**

A green wall comprising a vertical structure to which containing means of terrain, cultivatable or humus, are fixed in which vegetable units are planted, comprising a plurality of identical flanked modular elements (1). Each element comprises joining means for fixing to an adjacent element, each modular frame further comprising means for removably snap-engaging to joining means of a tray (18), the tray being able to contain cultivating terrain, or humus, in which a vegetable culture is planted.

## Description

The present invention relates to a wall covered in vegetation, also known as a green wall, where by the term "green" is meant a wall cultivated with specific plants, having a generally ornamental character, but sometimes also with characteristics aimed at improving the quality of the environment in terms of elimination of pollutant elements or correct oxygenation.

Green walls of known type are used for sub-dividing internal environments and also for delimiting external spaces.

They comprise structural means for supporting a layer of cultivatable soil, or humus, as well as, generally, irrigating means thereof so as to guarantee a correct moisture level for cultivation.

Plants of various natures are seeded or planted in the soil which, after a suitable growing time, guarantee a uniformly green appearance of the wall. Generally the soil is contained in suitable planters or recipients, which are fixed in an ordered and distributed wall to a support structure.

The structure has to be of dimensions such as to adapt to the environment destined to receive the green wall, while the recipients are generally constituted by planters made of traditional materials, such as terra cotta or synthetic material appropriately conformed and dimensioned.

Known green walls exhibit a series of problems, not homogeneous, which greatly limit the construction thereof.

A first series of problems relates to the support structure, which is not very versatile and must be dimensioned and constructed, time-by-time, correctly in terms of the target environment.

A second series of problems relates to humus containers, or trays, which have to be applied to the wall, which rarely can be re-used as they are of fragile construction, often extemporaneous or provisional, and must therefore be recycled once the plant structure has ended its useful life, and eliminated without damaging the environment.

A further series of problems relates to fixing means of containers to the support structure, which means can be simple to construct and rapid and versatile to deploy.

The aim of the present invention is to obviate the above-mentioned problems with a solution that is simple and economical.

The aim is attained with a rigid modular frame, having a preferably quadrangular plan, able to make up a wall when flanked by other identical frames; the modular frame comprising fixing means to adjacent frames. The wall is therefore formed without the aid of structural support means able to maintain the plurality of identical frames in position.

The rigid modular frames of the invention comprise, on each of the lateral perimeter sides, suitable fixing and support means for a soil-or humuscontaining tray for the plants planted in the tray.

The containing tray of the earth or humus has a rectangular profile complementary to the profile of the modular frame to which it is destined to be fixed, and comprises, on the bottom and peripheral sides thereof, suitable passage and drainage holes for the irrigating liquid, which can be simply water or water with the addition of suitable nutritional elements, such as fertilisers.

In a further characteristic of the invention, each tray is made up of biodegradable material such as the material described in document EP 1,949,784, the contents of which are considered to be part and parcel of the present description.

In particular, the material the trays are made of is made up of from 60% to 80% of pressed vegetable fibres mixed with an adhesive agent selected from among one from among polyvinyl alcohol, polycaprolactone and aminic acid. The aim of the invention is definitively attained by a green wall which comprises the characteristics set down in the independent claims.

The dependent claims relates to subordinated solutions which contribute to attaining the aims.

The advantages and constructional and functional characteristics of the invention will emerge from the detailed description that follows, which with the aid of the appended tables of drawings illustrates a particular embodiment given by a non-limiting example.

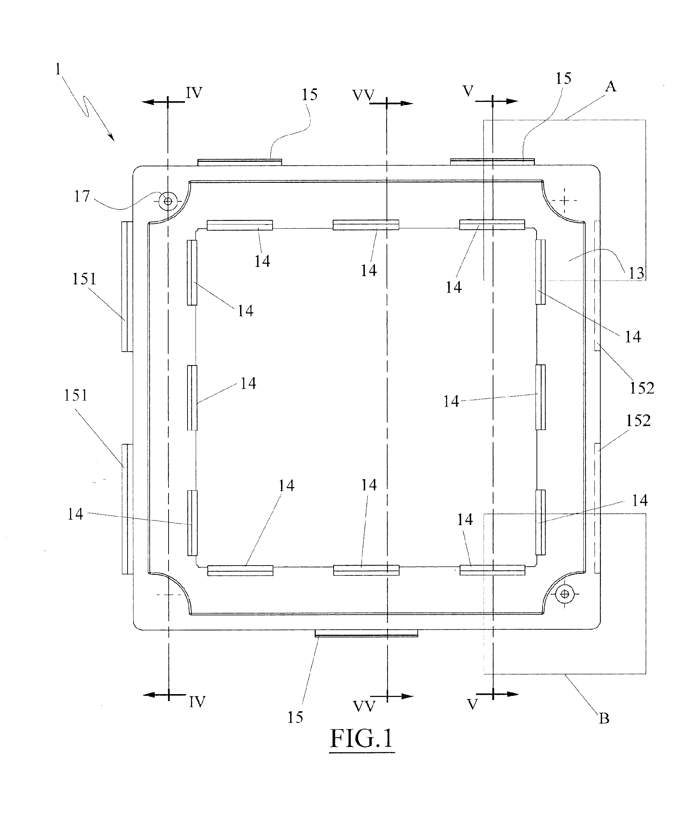

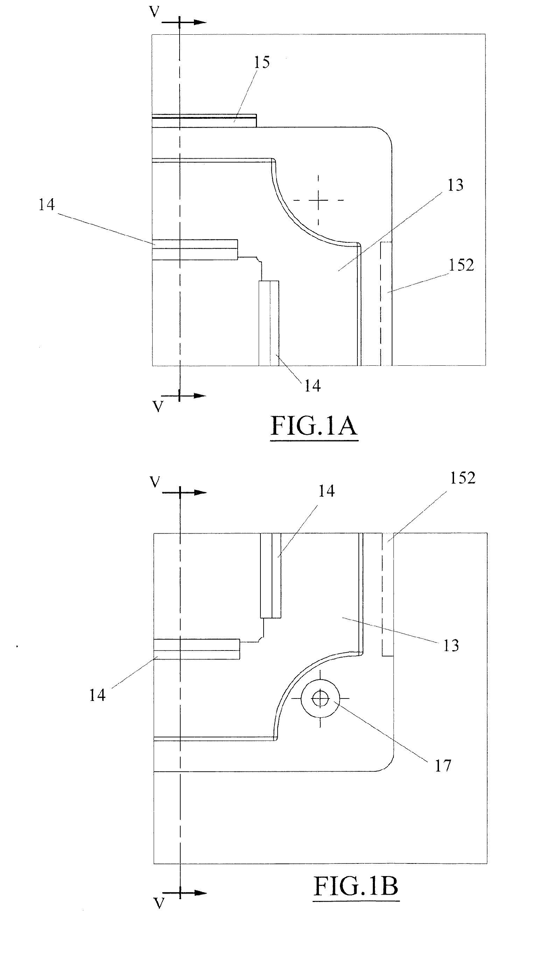

Figure 1 is a plan view of the modular frame of the invention from the front side.
Figure 1A shows portion A of figure 1 in a larger scale.
Figure1B shows portion B of figure 1, in a larger scale.
Figure 2 is a plan view of the modular frame of the invention from the rear.
Figure 2A shows portion A of figure 2, in a larger scale.
Figure 2B shows portion B of figure 2, in a larger scale.

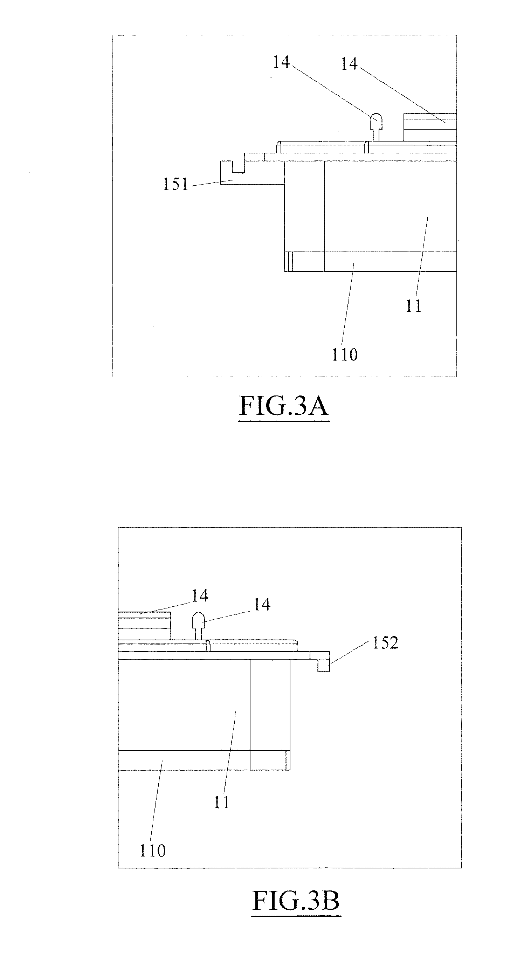

Figure 3 is view III of figure 2.
Figure 3A is portion A of figure 3, in a larger scale.
Figure 3B is portion B of figure 3, in a larger scale.

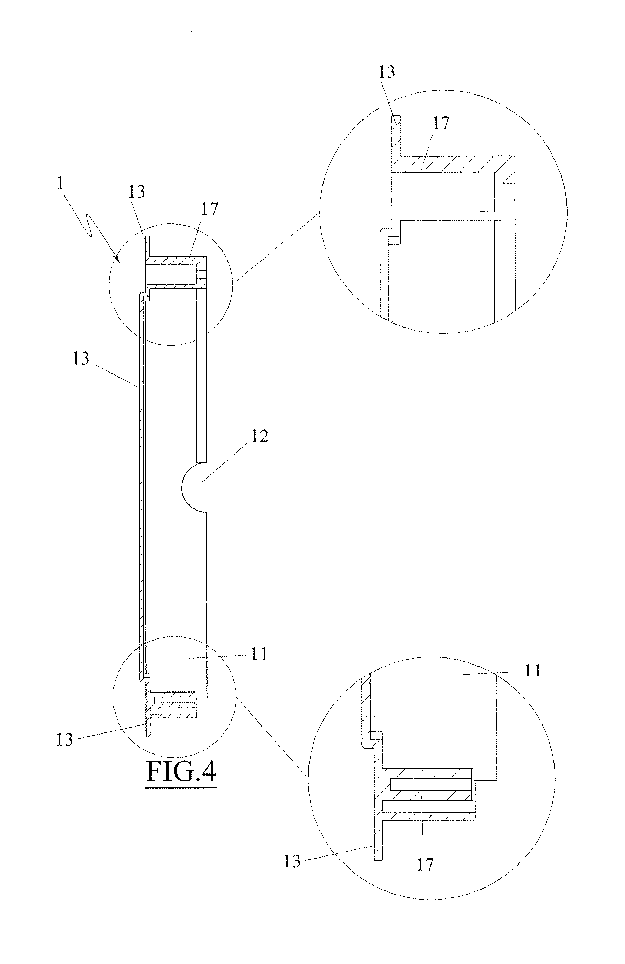

Figure 4 is section IV-IV of figure 1.

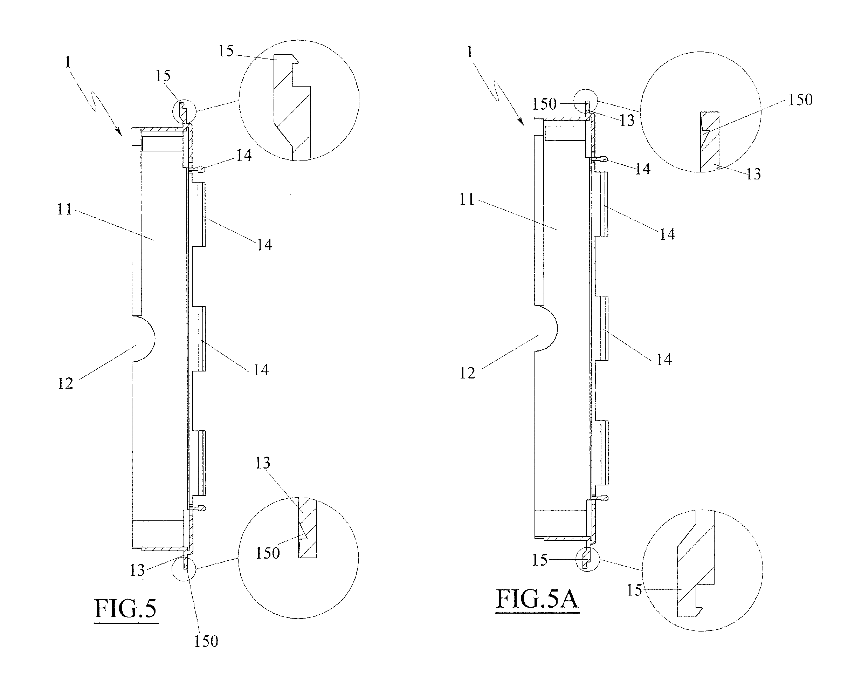

Figure 5 is section V-V of figure 1.
Figure 5A is section VV-VV of figure 1.
Figure 6 is a perspective view of figure 1 from the front.
Figure 6A is portion A of figure 6 in a larger scale.
Figure 6B is portion B of figure 6 in a larger scale.

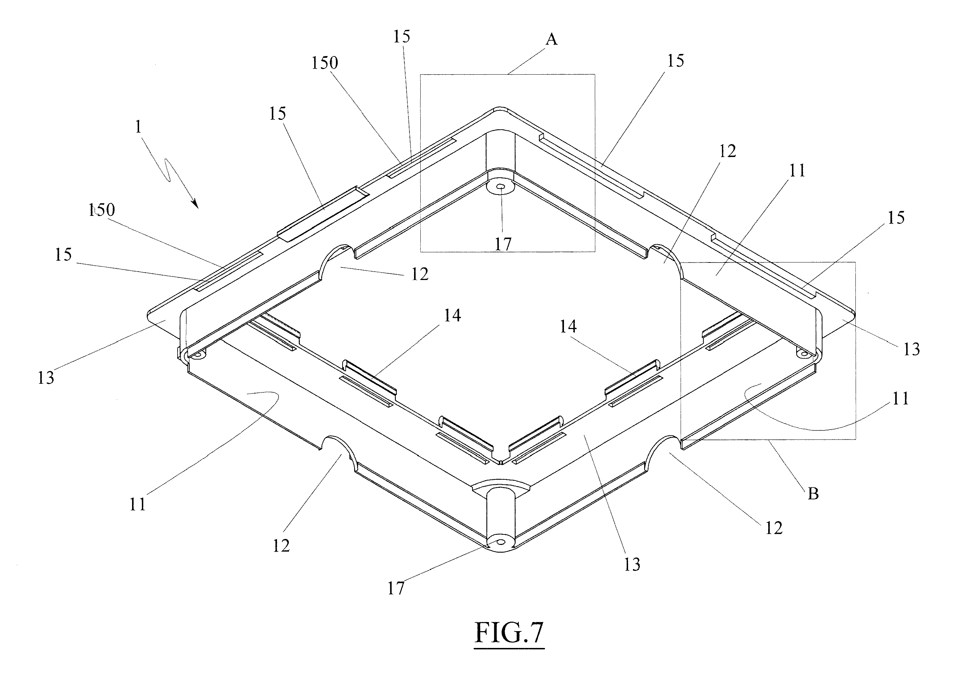

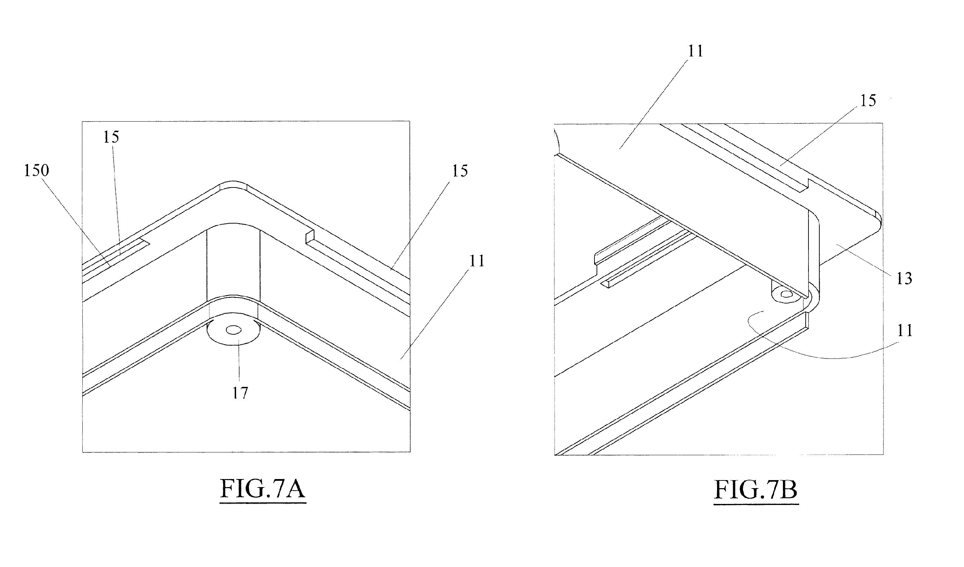

Figure 7 is a perspective view of figure 1 from the rear.
Figure 7A is portion A of figure, in a larger scale.
Figure 7B is portion B of figure 7, in a larger scale.

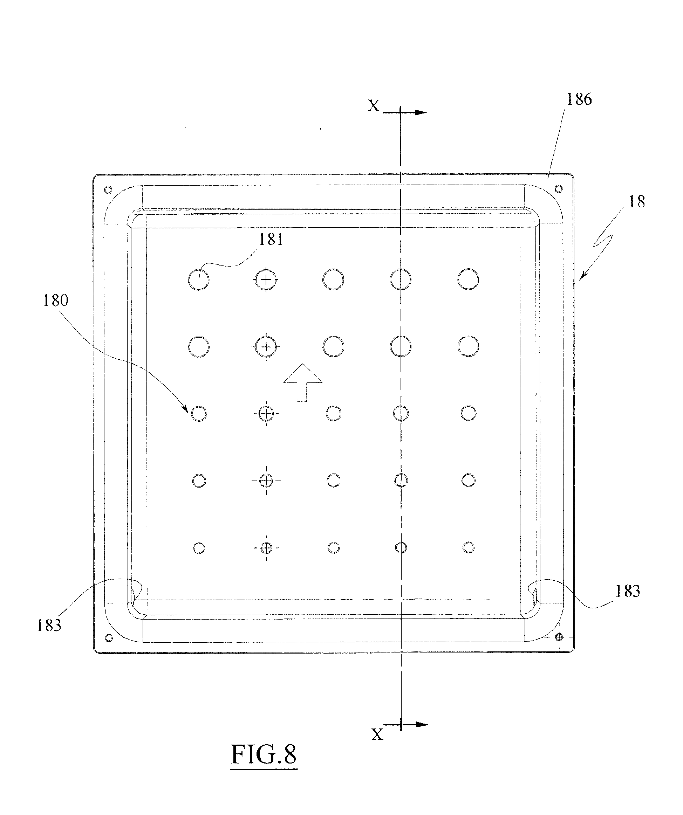

Figure 8 is a plan view of the tray from the open side.
Figure 9 is a plan view of the tray from the closed side.

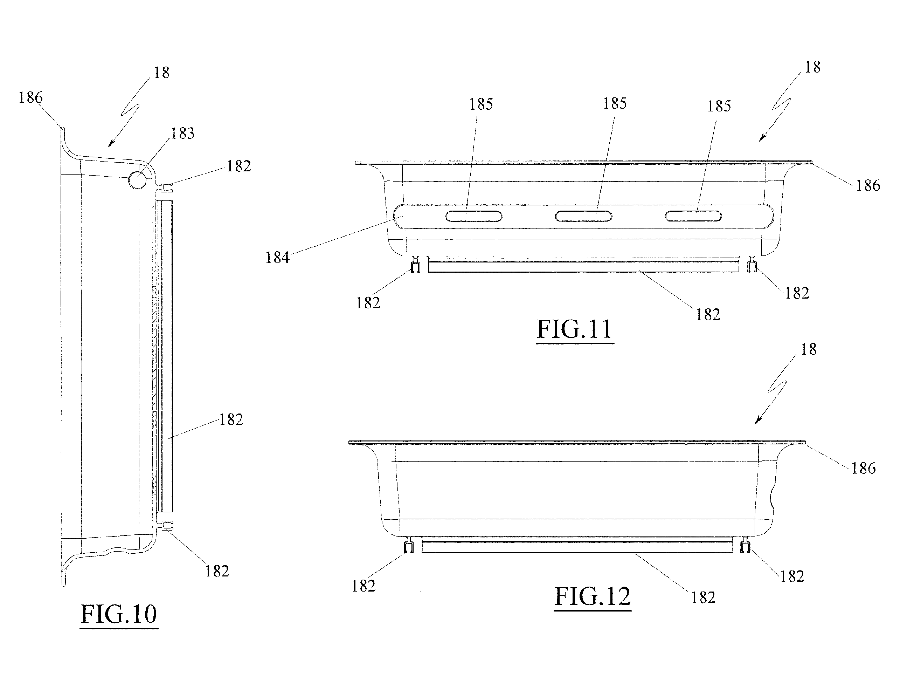

Figure 10 is section X-X of figure 8.
Figure 11 is a view from XI of figure 9.
Figure 12 is a view from XII of figure 9.
Figure 13 is a portion of green wall seen from the front.
Figure 14 is a portion of figure 13 seen from the rear.
Figure 15 is section XV-XV of figure 13.
Figure 16 is the view from XVI of figure 14.
Figure 17 is a perspective view of the green wall.

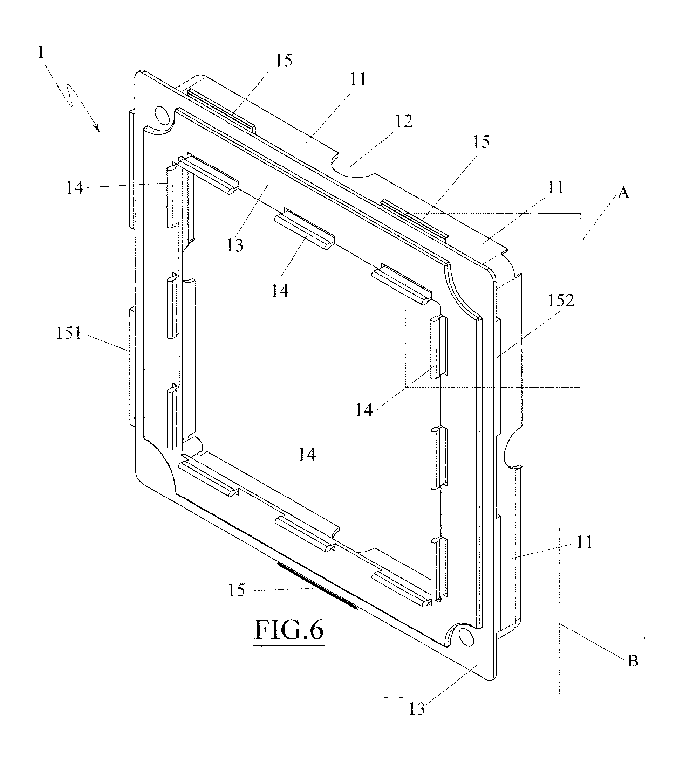

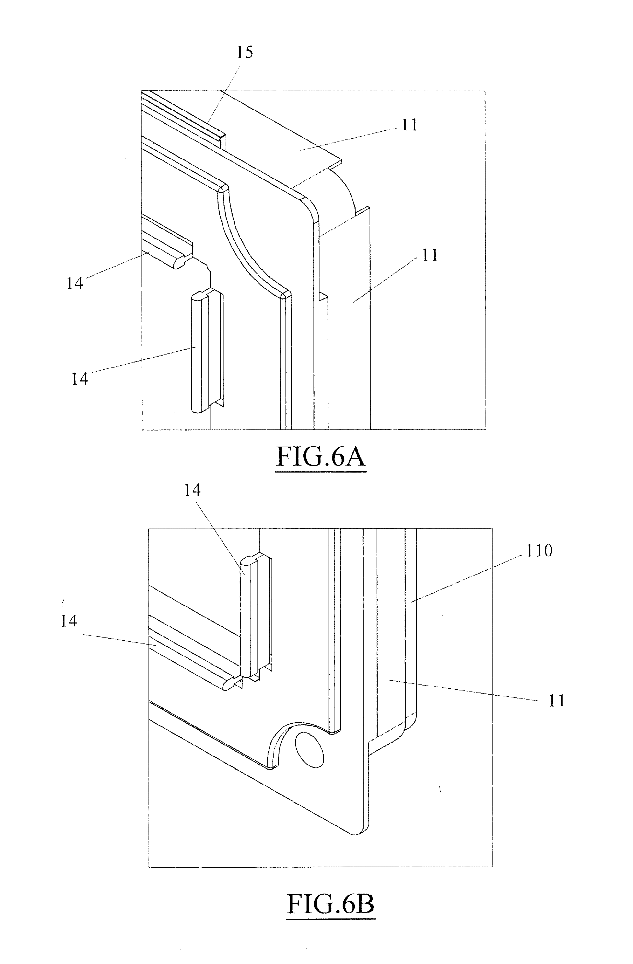

The figures, and in particular figure 6, depict a modular element 1 comprising four walls 11, each exhibiting a recess at a centre thereof.

The walls 11 branch from a flat frame 13, rectangular or square, which includes, on each internal edge thereof, three appendages 14 exhibiting a thickened edge facing on a same side.

A first external edge exhibits two shelves 15 which project from the edge and exhibit a raised edge, while the second external edge opposite the first comprises a further and like shelf 15.

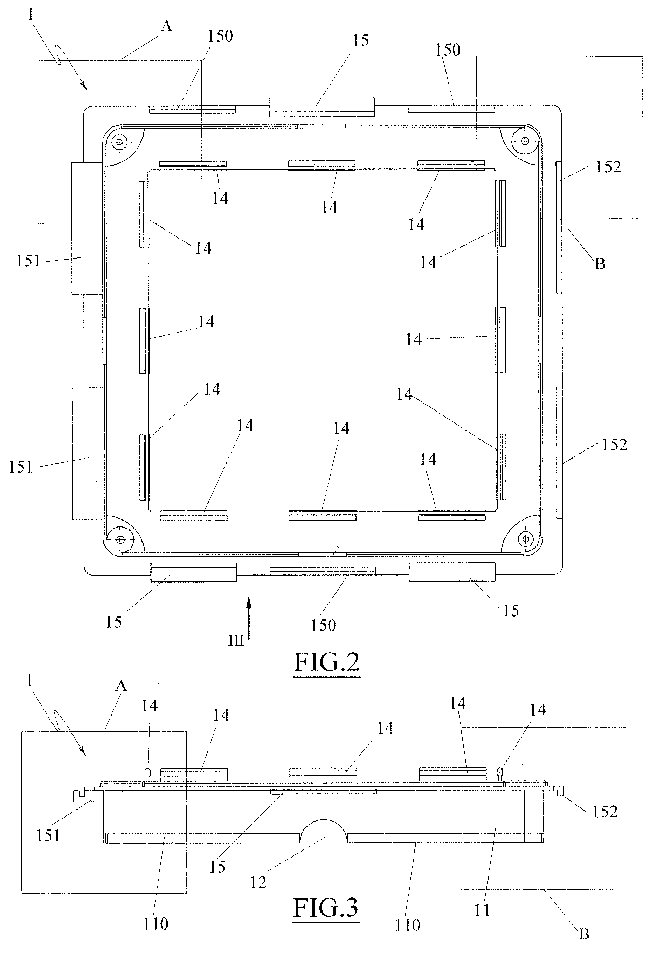

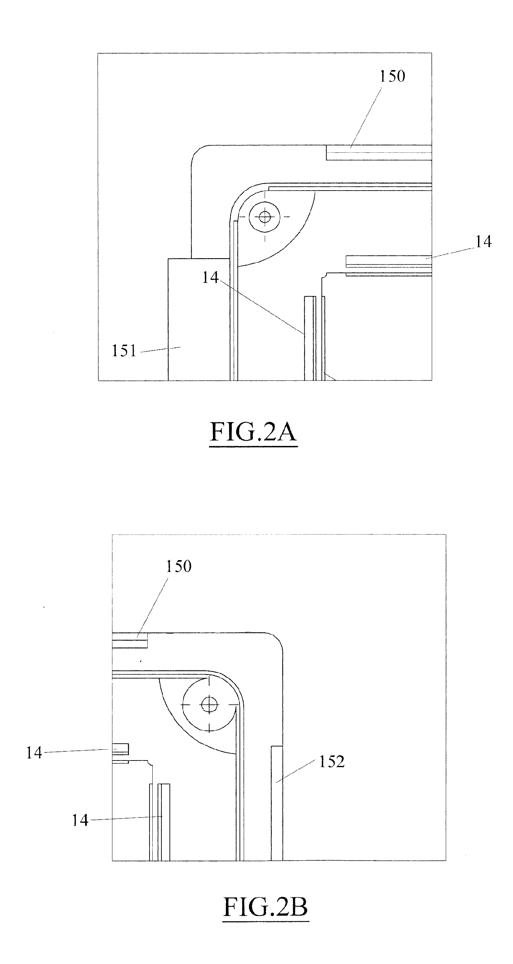

A seating 150 (figure 2) is fashioned on the first external edge, at a centre thereof between the shelves 15 and in the lower surface of the frame, which seating 150 is able to house a raised edge of the shelf 15 located on the second external edge of an adjacent modular element, while on the second external edge, at the sides of the shelf 15, two seatings 150 are afforded for receiving the edge of the shelves 15 of the opposite edge.

The third and the fourth edge of the frame, opposite one another, respectively comprise two shelves 151 with raised edges, and two recesses 152 able to accommodate the raised edge of the shelves 151 of an adjacent frame.

The central portion of the flat modular frame 13 internal of the walls 11 comprises, at corners of the walls, a shank 17 having an axial cavity able to receive a screw.

The modular element can be fixed in a pair, back-to-back, with another modular element orientated in the opposite direction.

For this purpose, the walls 11 of each modular element exhibit an edge 110 which on a half-perimeter thereof is tapered towards the inside, and on the other half-perimeter thereof is tapered in an external direction, in such a way that in each pair of modular elements the edges of the walls 11 of one element are inserted partially on the edges of the walls 11 of the other element.

Each modular element 1 of figures from 1 to 7 is able to support the tray 18 shown in figures from 8 to 12.

The tray 18 has a square shape, a flat bottom and walls that are flared towards the open side.

The tray 18, when orientated vertically, exhibits on the bottom thereof a series of horizontal alignments 180 of holes 181, the holes 181 having a decreasing diameter from the upper alignment to the lower alignment.

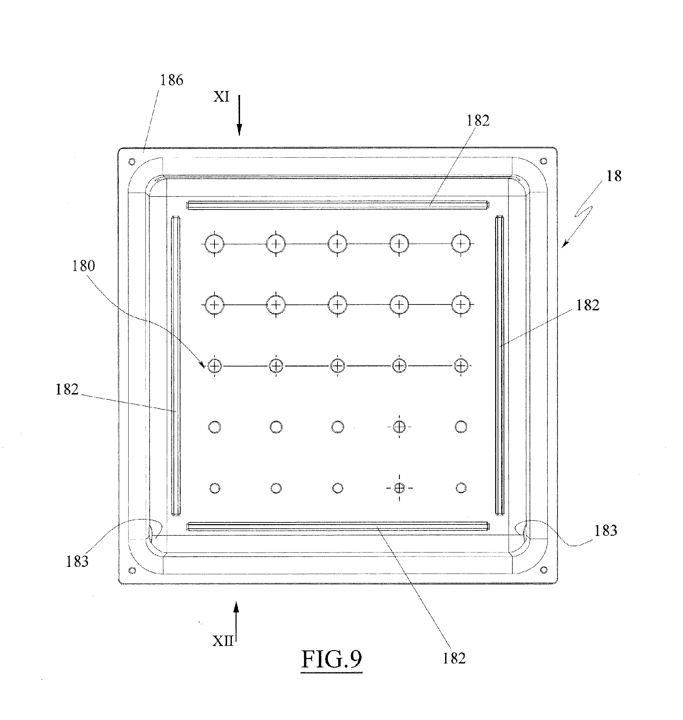

A bracket 182 branches from each side of the bottom, facing outwards (figure 9), with a free end thereof being U-shaped with converging wings.

The lower side of the vertically-positioned tray exhibits, in proximity of the ends of the vertical walls, two holes 183 aligned on a same axis.

The opposite upper side of the tray has a lowered channel 184 in which three windows 185 are formed.

The peripheral edge of the tray is facing externally so as to form a flat frame 186.

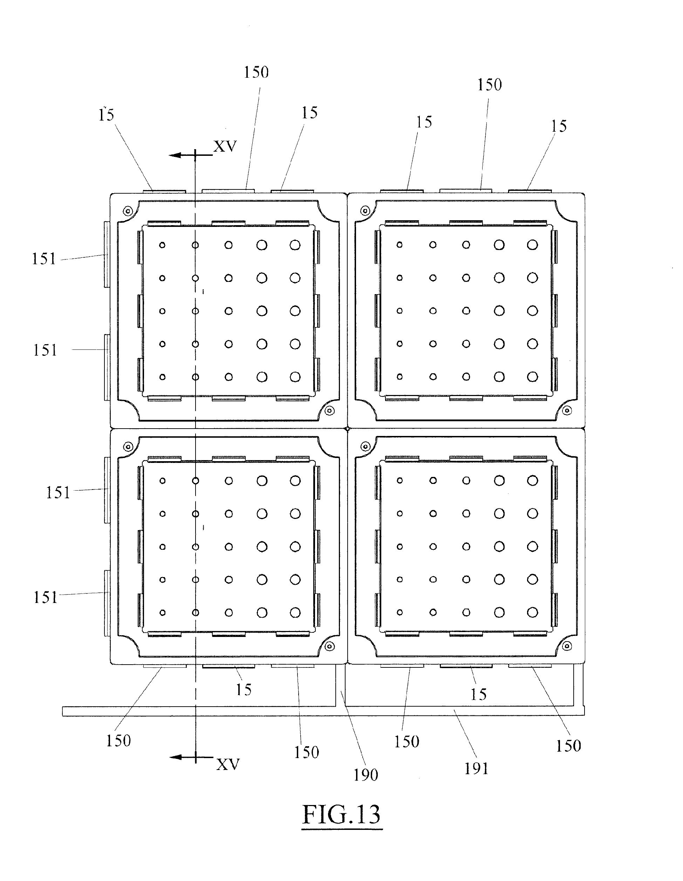

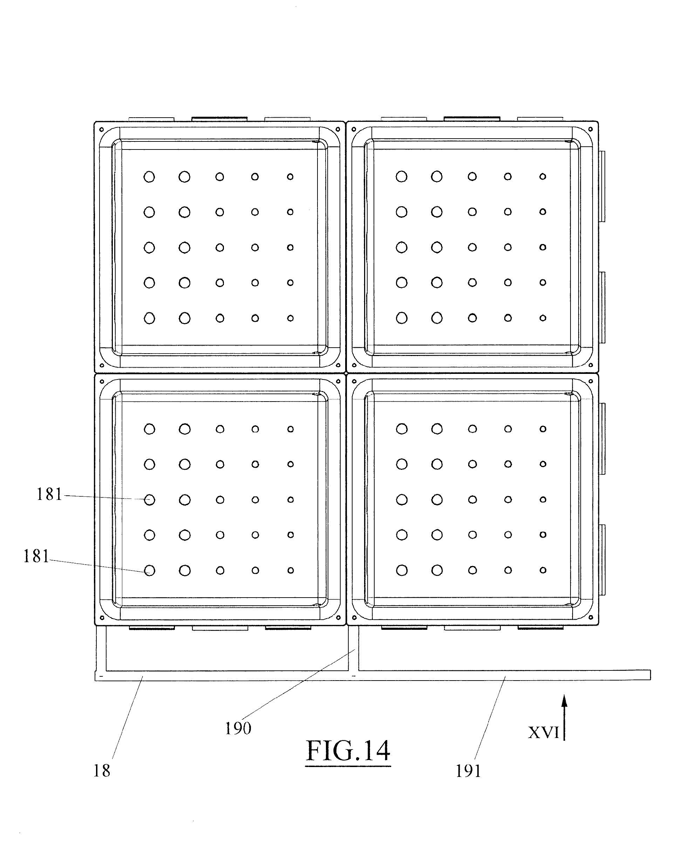

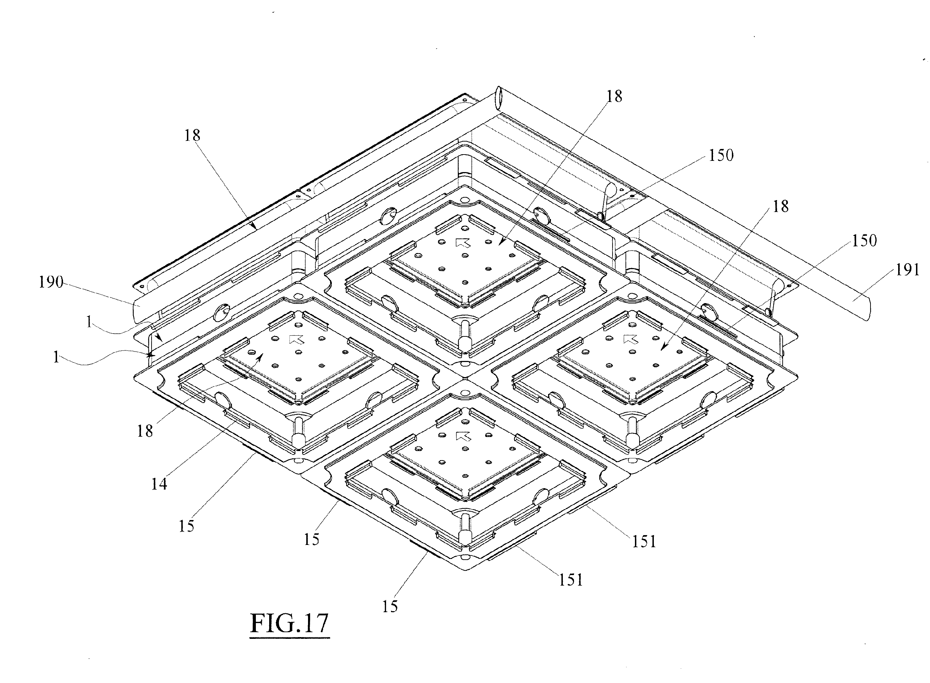

Figures 13 to 18 illustrate a portion of the green wall according to the invention.

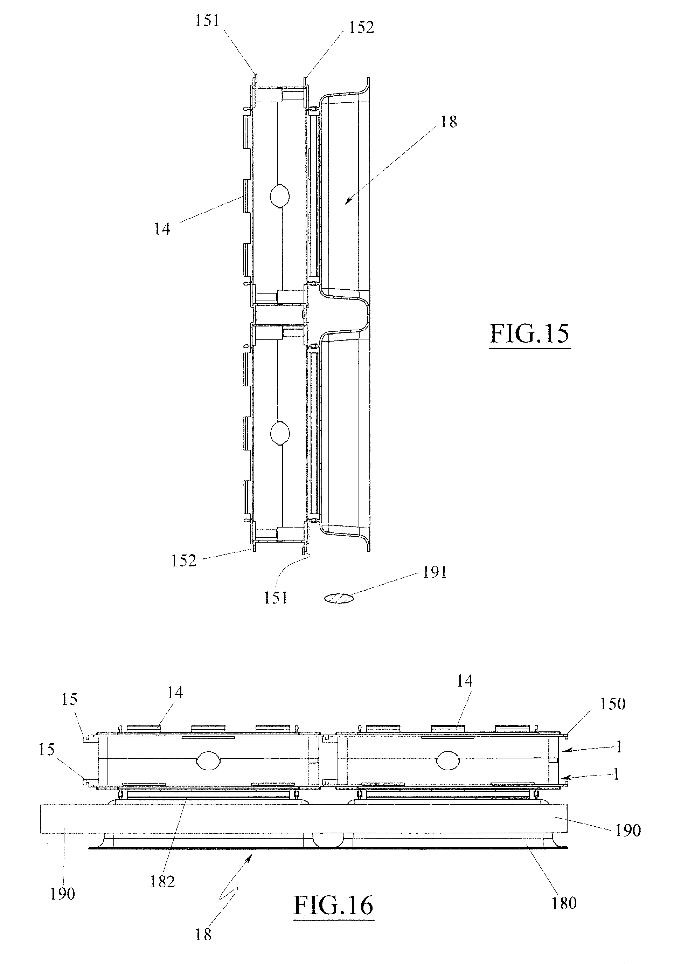

These figures show a structure 19 comprising four pairs of modular elements 1, where in each pair two modular elements are coupled back-to-back (figure 15 and figure 16).

First couples of modular elements are aligned, so as to be able to joint-fit the shelves 15 of each element with the seatings 150 of the adjacent element. This alignment thus-formed is then connected to an identical adjacent alignment by sliding raised edges of the shelves 151 in the aligned seatings 152 of the opposite edge.

In this way the appendages 14 of each pair of elements are directed in opposite directions to form two grids in which the shelves can be snap-fitted. Pairs of modular elements are received between two adjacent uprights assembled with the walls 11 complementary and coplanar, facing in opposite directions, each element being secured to a joined element thereof by screw elements inserted in the shanks 17.

The appendages 14 of each element are then faced in the opposite direction to the appendages of the other element.

Each pair of modular elements 1 can therefore support two trays 18 on the opposite sides thereof.

Thus a plurality of modular elements 1 is created, which, thanks to the appendages 14 thereof, provides perpendicular alignments of shelves able to snap-fittingly receive brackets 182 branching from the rear side of the trays 18.

In this way, the trays 18 are fixed solidly and easily-removably to the modular elements 1 so as to form a plurality of adjacent containers which provide, with the respective humus content, the green wall having the desired dimensions.

The invention functions as follows.

The trays 18 are first filled with humus and planted with the plants that will make up the green wall.

Once the cultivated plants are well-established in the trays, the trays are fixed to the support structure on one side or on both sides thereof.

Careful attention is required to position all the trays with the correct orientation, i.e. with the lowering 184 facing upwards.

Superposed above each horizontal alignment of trays 18 is a full-width conduit 190 that can distribute the irrigation fluid in the lowering 184.

The various conduits 190 are linked to a common manifold 191.

The liquid enters the tray through the windows 185 and wets the humus. The correct degree of moisture in the humus is guaranteed by the fact that the holes 181 aligned on the bottom of the tray have a progressively decreasing diameter in a downwards direction, so as to progressively reduce the amount of irrigation liquid in the downwards direction.

The liquid reaching the lower side of the tray is definitively drained through the holes 183.

The liquid drained from the holes 181 and 183 collects in the lowered channel 184 of the underlying tray.

The correct drainage of the irrigation liquid is essential for maintaining, at every point of the trays, the correct concentration of the minerals contained in the liquid.

Once the life of plants contained in the trays has come to an end, the biodegradable material they are made of can be sent to a shredder together with the humus and other vegetation.

The invention is not limited to the embodiment described in the foregoing, and variants and improvements can be made thereto without forsaking the protective scope of the claims that follow.

## Claims

1. A green wall comprising a vertical structure to which terrain-containing means, cultivatable or humus, are fixed in which plants are planted, **characterised in that** it comprises a plurality of identical flanked modular elements (1), each element (1) comprising joining means for fixing to an adjacent element (1), each modular element (1) further comprising means for removably snap-engaging to joining means of a tray (18), the tray being able to contain cultivating terrain, or humus, in which a plant culture is planted.

2. The green wall of claim 1, **characterised in that** each modular element (1) comprises four walls (11) branching from a rectangular flat frame (13) which on each side comprises at least two appendages (14) perpendicular to the frame, destined to engage in U-shaped brackets (182) branching from a bottom of the trays (18).

3. The green wall of claim 1, **characterised in that** the appendages (14) have a thickened edge so as to removably snap-fit in the shelves (192) present on the trays.

4. The green wall of claim 1, **characterised in that** at least a shelf (15) branches from a first edge of the modular element, which at least a shelf (15) is able to engage with a respective cavity (150) present on the opposite edge of an identical adjacent modular element.

5. The green wall of claim 1, **characterised in that** at least a shelf (151) branches from a second edge of the modular element perpendicular to the preceding edge, which at least a shelf (151) is able to engage in a seating (152) present on the opposite edge of an identical adjacent modular element.

6. The green wall of claim 1, **characterised in that** in at least two opposite corners of the walls (11) of the modular element a shank (17) is present, having an axial cavity able to receive a screw.

7. The green wall of claim 1 and claim 6, **characterised in that** each modular element can be fixed in a pair, back-to-back, to a further identical modular element orientated in an opposite direction using screw means inserted in respective shanks (17).

8. The green wall of claim 1, **characterised in that** the containing trays of the humus are constructed in a biodegradable material.

9. The green wall of claim 8, **characterised in that** the biodegradable material is composed at least of 60% to 80% of pressed vegetable fibres mixed with at least an adhesive agent selected from among polyvinyl alcohol, polycaprolactone and aminic acid.

10. The green wall of claim 1 and claim 8, **characterised in that** each tray (18) has a square plan, a flat bottom and walls that are flared towards the open side thereof, and when orientated with the bottom vertical exhibits, on the bottom thereof, a series of horizontal alignments (180) of holes (181).

11. The green wall of claim 1 and claims from 8 to 10, **characterised in that** each tray (18) exhibits, in proximity of the lower edge, at least a drain hole (183) fashioned on the lateral wall, and on the opposite upper side a lowered channel (184) in which windows (185) are fashioned.

12. The green wall of claim 10, **characterised in that** the holes (181) of the bottom have a decreasing diameter from the upper alignment to the lower alignment.

13. The green wall of claim 9, **characterised in that** a bracket (182) branches from each side of the bottom, which bracket has a U-shaped free side able to removably receive in a snap-fit the appendages (14) branching from the modular frame.
